# FASCICULE DE BREVET EUROPEEN

(11) **EP 3 582 200 B1**
(45) Date de publication et mention de la délivrance du brevet: **27.08.2025**
(21) Numéro de dépôt: 19186715.9
(22) Date de dépôt: 23.07.2015
(51) Int. Cl.: G08C 17/02

(54) **PROCÉDÉ DE DÉTERMINATION D'UN ÉQUIPEMENT À COMMANDER PAR UN OBJET DE COMMANDE ASSOCIÉ À UN RÉFÉRENTIEL, ET DISPOSITIF DE COMMANDE ASSOCIÉ**
BESTIMMUNGSVERFAHREN FÜR EINE AUSSTATTUNG, DIE DURCH EIN STEUEROBJEKT GESTEUERT WERDEN SOLL, DAS MIT EINEM BEZUGSSYSTEM KOMBINIERT IST, UND ENTSPRECHENDE STEUERVORRICHTUNG
METHOD FOR DETERMINING AN ITEM OF EQUIPMENT TO BE CONTROLLED BY A CONTROLLING OBJECT ASSOCIATED WITH A REFERENCE SYSTEM, AND ASSOCIATED CONTROL DEVICE

(30) Priorité: 25.07.2014 FR 1457234
(43) Date de publication de la demande: 18.12.2019
(62) Demande divisionnaire de: 15741997.9
(73) Titulaire: QORVO PARIS, 75015 Paris (FR)
(72) Inventeur: TCHEDIKIAN, Simon, 92130 Issy Les Moulineaux (FR)
(74) Mandataire: D Young & Co LLP

(56) Documents cités:
- FR-A1- 2 985 584
- US-A1- 2005 225 453

## Description

### Domaine technique

L'invention se situe dans le domaine des télécommandes. Plus précisément, l'invention concerne des procédés pour déterminer et commander un équipement à commander. L'invention concerne également une utilisation, un dispositif et un système mettant en œuvre ces procédés.

### État de la technique antérieure

Il est connu de l'état de la technique des télécommandes pour déterminer et commander un équipement à commander à partir d'une détermination de la position de la télécommande sur une carte et de son orientation.

On connaît par exemple le document « Home Appliance Control System based on Robust Indoor User Localization using Wifi » des auteurs Dhao et al., publié par le journal « International Journal on Human Machine Interaction » en 2013. Ce document décrit un système comprenant une télécommande qui dans un mode automatique est pointée par un utilisateur vers un équipement. Dans ce mode automatique, l'utilisateur contrôle l'équipement pointé associé à la zone géographique dans lequel il est physiquement présent. Le document décrit un système déterminant l'équipement à partir de la localisation de l'utilisateur et de l'orientation de la télécommande.

Cette solution connue présente néanmoins diverses limitations. D'une part, le système a besoin d'un apprentissage de la position des équipements préalablement à l'utilisation de la télécommande.

D'autre part, un serveur doit stocker une carte de l'environnement qui contient des informations sur les planchers, les limites de zone, les murs, l'emplacement de chaque équipement, et la cartographie de l'association de zone à équipement. L'élaboration de cette carte est réalisée préalablement à l'utilisation de la télécommande. De plus, l'ajout, la suppression ou le déplacement d'équipement nécessite une mise à jour de la carte.

Enfin, la localisation de la télécommande est réalisée par apprentissage de toutes les zones (apprentissage appelé "fingerprinting"). Cet apprentissage doit être réalisé préalablement à l'utilisation de la télécommande et doit être réalisé régulièrement. Par exemple, l'ajout ou le déplacement d'une station WiFi dans l'environnement impose de réaliser un nouvel apprentissage selon l'enseignement de ce document. Cette méthode ne peut donc être utilisée pour un déploiement aisé chez des particuliers.

Pour référence, des technologies de localisation indoor (pour l'anglais à l'intérieur) sont connues telles que UWB ou EMF.

La technologie UWB (pour l'anglais « Ultra Wide Band ») est une technologie qui permet de géolocaliser des objets en intérieur avec une précision de l'ordre de quelques centimètres à quelques dizaines de centimètres. Pour déterminer l'orientation, une autre technologie est nécessaire.

La technologie EMF (pour l'anglais « Electromagnetic field ») » est une autre technologie, apte à déterminer position et orientation. La portée d'une telle technologie est de l'ordre de 2,5 à 5 mètres. Cette technologie est bien exposée dans le document US6073043.

Voir aussi la publication FR2985584.

### Exposé de l'invention

La domotique existe depuis plusieurs dizaines d'années. Le confort apporté par les produits domotiques est significatif : contrôle des lumières, volets, portails, du chauffage, objets connectés, etc. Cependant, la domotique n'a jamais réussi à dépasser le microcosme des technophiles pour atteindre le grand public. Ceci est principalement dû à la complexité de configuration et d'usage de tous ces produits. Quelques initiatives comme les ampoules Hue de Philips ou l'application iPhone de Somfy pour contrôler des volets électriques ont eu un certain succès auprès du public. Cependant ces initiatives sont encore limitées à une seule application : chaque télécommande ne fonctionne qu'avec l'équipement avec lequel il a été fourni, et ne fonctionne pas pour contrôler d'autres produits.

Certains acteurs proposent des télécommandes domotiques multi-usages afin de pouvoir contrôler plusieurs équipements à la fois, mais ces produits sont très compliqués à configurer. Il faut associer des boutons de la télécommande à des actions précises : bouton 1 pour allumer/éteindre lampe du salon, bouton 2 pour baisser le chauffage, bouton 3 pour augmenter le chauffage, etc. Il devient vite difficile de retenir à quelle fonction est associée le bouton.

Il existe également l'essor des applications domotiques pour smartphone ou tablettes. Celles-ci permettent à l'utilisateur de naviguer au sein de menu et d'accéder à l'équipement qu'il souhaite contrôler. Cette solution est plus ergonomique pour l'utilisateur, mais reste contraignante. Par exemple, pour allumer la lumière dans le salon, l'utilisateur doit allumer son smartphone ou sa tablette, sélectionner l'application de domotique, aller dans le menu contrôle des lumières ou dans le menu « salon », sélectionner l'ampoule qu'il souhaite contrôler, appuyer sur le bouton « allumer ». Le nombre d'étapes pour allumer une ampoule reste trop important et l'utilisateur doit se souvenir de l'emplacement des équipements à commander au sein des menus et sous-menus de l'application.

Un but de l'invention est de permettre de contrôler tout ce qui est contrôlable dans une maison sans aucune configuration compliquée et sans avoir besoin de passer par un grand nombre d'étapes.

Un but de l'invention est notamment de remédier à tout ou partie des inconvénients précités en proposant un procédé de détermination d'un équipement à commander par un objet de commande transportable disposée dans un espace comprenant des unités de positionnement. À cet effet, l'invention repose sur la mise en œuvre des unités de localisation apte à déterminer leurs positions relatives les unes par rapport aux autres.

Ces unités de localisation peuvent par exemple mettre en œuvre des puces de localisation en environnement fermé basées sur la technologie ultra-large bande (UWB, pour l'anglais « Ultra Wide Band »).

La localisation de ces unités de localisation peut par ailleurs être réalisée à partir de procédés de latération, trilatération ou multilatération.

Une idée qui est à la base de l'invention consiste à associer ces unités de localisation et un objet de commande transportable. Selon l'invention, l'objet de commande transportable peut avantageusement être apte à déterminer sa position relative par rapport aux différentes unités de localisation.

Les mêmes procédés bien connus qui permettent aux unités de positionnement de déterminer leurs positions position relatives les unes par rapport aux autres permettent à la télécommande ou à un dispositif tiers de connaître la position relative de la télécommande par rapport aux différentes unités de localisation.

Dans toute la suite du document, il est entendu que la notion de commande d'un équipement peut se résumer à l'obtention par la télécommande d'une interface de commande relative à cet équipement.

La notion de commande d'un équipement peut en outre se résumer à une simple commande d'information relative de ce dernier. Ainsi, on entend par commande d'un four par une télécommande la possibilité de pointer cette télécommande vers ce four dans le but d'obtenir le temps restant de cuisson même si il n'est pas possible de commander physiquement le four. Il s'agit d'une commande d'interrogation du four.

La notion de commande d'un équipement peut également revêtir la commande réelle et physique de cet équipement.

Plus généralement, toute interaction avec l'équipement sera entendue comme une commande de ce dernier.

Ainsi, suivant un premier aspect de l'invention, il est proposé un procédé de détermination d'un équipement à commander par un objet de commande transportable selon la revendication 1.

Selon une particularité de l'invention, l'étape de détermination d'un équipement à commander comprend une notification de cette détermination à un utilisateur du procédé de commande. De préférence, cette notification est réalisée par une émission d'un son ou d'une vibration par l'objet de commande. Avantageusement, l'émission d'un son ou d'une vibration par l'objet de commande permet à un utilisateur du procédé de détermination d'un équipement à commander de repérer les objets dans l'espace sans regarder l'objet de commande.

Avantageusement, ledit objet de commande peut être une télécommande.

Avantageusement, l'espace peut comprendre une pluralité d'unité de positionnement aptes à déterminer leurs positions relatives les unes par rapport aux autres.

La détermination par une unité de positionnement de sa position par rapport à une autre unité de positionnement peut générer une notification d'informations relatives à cette détermination à destination d'un utilisateur du procédé de détermination. Ces informations peuvent par exemple être affichées sur un afficheur de l'objet de commande. Ces informations peuvent alerter l'utilisateur sur un mauvais positionnement d'une ou plusieurs des unités de positionnements. Ce peut par exemple être le cas lorsqu'un obstacle ou un mur est situé entre deux unités de positionnements. Ce peut être le cas (aussi ou alternativement) lorsque trois unités de positionnements sont alignées : l'alignement de trois unités de positionnement diminue la précision de la détermination de la position et/ou de l'orientation de l'objet de commande.

Ainsi, la mise en œuvre d'unités de localisation aptes à déterminer leurs positions relatives les unes par rapport aux autres permet de déterminer un équipement sans devoir réaliser préalablement une carte de l'environnement qui contient des informations sur les planchers, les limites de zone, les murs, l'emplacement de chaque équipement, et la cartographie de l'association de zone à équipement.

Cependant, ce type d'information peut avantageusement être utilisé pour discriminer efficacement l'équipement à commander en fonction du couple position/orientation de l'objet de commande.

Un équipement peut être une prise électrique, un volet roulant, du matériel audiovisuel ou informatique, une alarme anti intrusion, un détecteur de fumée, un détecteur de CO, un détecteur de fumée, un thermostat, un portail, une serrure, un jouet tel qu'une voiture électrique, du matériel tel qu'une machine à café, un réveil, une horloge, un équipement de cuisine tel qu'un four, une hotte, un réfrigérateur, un lavevaisselle, etc.

En outre, la modification du positionnement d'une unité de localisation ou l'ajout d'une nouvelle unité de localisation ne nécessite pas de réaliser un nouvel apprentissage pour déterminer la position de l'objet de commande dans l'espace relatif aux unités de localisation.

Avantageusement, l'étape de détermination de la position et/ou l'étape de détermination de l'orientation de l'objet de commande dans l'espace peut comprendre une étape d'évaluation du temps de trajet d'un signal radio entre l'objet de commande et une unité de positionnement, ou entre plusieurs unités de positionnement.

Avantageusement, l'étape de détermination de la position et/ou l'étape de détermination de l'orientation de l'objet de commande dans ledit espace peut comprendre une étape d'évaluation de la puissance de réception d'un signal radio par l'objet de commande ou par l'au moins une unité de positionnement.

Avantageusement, l'étape de détermination de la position et/ou l'étape de détermination de l'orientation de l'objet de commande dans l'espace peut comprendre une étape de détermination des angles de réception d'un signal radio par l'objet de commande ou par l'au moins une unité de positionnement.

Avantageusement, l'étape de détermination de la position et/ou l'étape de détermination de l'orientation de l'objet de commande dans ledit espace peut mettre en œuvre une utilisation et une mesure de champs électromagnétiques.

Avantageusement, l'étape de détermination de la position de l'objet de l'objet de commande et/ou l'étape de détermination de l'orientation dans cet espace relatif peut mettre en œuvre une étape de latération, trilatération ou multilatération.

De préférence, l'étape de détermination de la position de l'objet de commande dans ledit espace peut mettre en œuvre une étape utilisant une technique mettant en œuvre, des temps d'arrivée telle que la technique TOA et/ou des différences de temps d'arrivée telle que la technique TDOA et/ou des angles d'arrivée telle que la technique AOA, de signal radio.

Avantageusement, l'étape de détermination de la position et/ou l'étape de détermination de l'orientation de l'objet de commande dans cet espace relatif peut mettre en œuvre une étape de triangulation.

De préférence, l'étape de détermination de la position et de l'orientation de l'objet de commande dans cet espace peut mettre en œuvre une étape utilisant une mesure d'un champ électromagnétique.

Les distances entre l'objet de commande et les unités de positionnement peuvent être déterminées selon plusieurs procédés. Une première famille de tels procédés met en œuvre un calcul du temps de trajet d'un signal radio entre l'objet de commande et les unités de positionnement. Une deuxième famille met en œuvre un calcul de la puissance d'un signal radio en réception du côté des unités de positionnement ou de l'objet de commande. Une combinaison de ces procédés peut avantageusement être utilisée afin d'améliorer la précision de la localisation de l'objet de commande dans l'espace comprenant les unités de positionnement.

Avantageusement, le procédé selon l'invention peut comprendre une étape mettant en œuvre une détermination de l'angle de réception d'un signal radio reçu par l'objet de commande ou par l'au moins une unité de positionnement. L'angle de réception du signal radio peut avantageusement améliorer la précision de la position et de l'orientation de l'objet de commande transportable pour un nombre d'unités de positionnement donné. L'angle de réception du signal radio peut avantageusement permettre de mettre en œuvre une triangulation en utilisant moins d'unité de positionnement.

Avantageusement, le procédé selon l'invention peut comprendre une étape mettant en œuvre une captation par l'objet de commande de grandeurs physique dans l'espace.

Une captation par l'objet de commande de grandeurs physiques dans l'espace peut avantageusement améliorer la précision de l'orientation de l'objet de commande. Les grandeurs physiques peuvent par exemple être captées par un accéléromètre, un gyroscope, ou un capteur de champ magnétique terrestre. Plusieurs grandeurs physiques peuvent être captées pour améliorer encore la précision de la détermination de la localisation et/ou de l'orientation de l'objet de commande. Un capteur de pression ou d'altitude pourrait encore améliorer ces déterminations.

Avantageusement, le procédé selon l'invention peut comprendre une étape mettant en œuvre une captation par l'objet de commande de la distance entre ce dernier et un obstacle se situant dans le sens pointé par l'objet de commande.

Une captation par l'objet de commande de la distance entre ce dernier et un obstacle se situant dans le sens pointé par l'objet de commande peut avantageusement améliorer la précision.

Avantageusement, le procédé selon l'invention comprend une étape pour associer un référentiel lié à l'objet de commande à un référentiel lié à l'au moins une unité de positionnement. De préférence, l'étape d'association du référentiel lié à l'objet de commande au référentiel lié à l'au moins une unité de positionnement comprend pour chacune des unités de positionnement une étape comprenant un pointage par l'utilisateur de cet objet de commande vers une unité de positionnement et un appui de l'utilisateur sur l'objet de commande. Ainsi, lorsque l'étape de positionnement des unités de positionnement n'est pas réalisée dans le même référentiel que l'étape d'orientation de la télécommande, les deux référentiels sont liés. En ce cas, il peut être demandé à l'utilisateur de pointer certaines unités de positionnement et d'appuyer sur un bouton et de capturer l'orientation pour chaque unité de positionnement. Il est ainsi possible de lier l'orientation de la télécommande avec l'espace des unités de positionnement. De préférence, dans ce cas, chaque équipement à commander peut s'activer afin que l'utilisateur sache quel équipement à commander il doit pointer. L'activation peut être perçue par la mise en œuvre d'un clignotement d'une ampoule, de la montée et/ ou l'abaissement de volets, etc.

Avantageusement, le procédé selon l'invention peut comprendre une étape pour définir une enveloppe virtuelle d'au moins un équipement à commander. L'étape de détermination d'un équipement à commander peut dans ce cas utiliser l'enveloppe virtuelle définie pour l'au moins un équipement à commander. Avantageusement, la définition de l'enveloppe virtuelle permet la mise en œuvre d'une marge de tolérance de sorte que l'équipement à commander puisse être déterminé même si son enveloppe virtuelle n'est pas parfaitement pointée par l'objet de commande.

Avantageusement, l'enveloppe virtuelle peut être définie à partir d'une pluralité de déterminations de position et d'orientation de l'objet de commande dans l'espace. Par exemple, l'enveloppe virtuelle peut être définie par la détermination de l'enveloppe convexe de la projection des sens pointés sur un volume particulier. L'objet de commande peut mettre en œuvre un procédé d'apprentissage de la localisation de l'équipement à commander par pointage de son enveloppe virtuelle. Il peut être demandé à l'utilisateur de pointer vers un même équipement ou une même enveloppe virtuelle dans l'espace de plusieurs positions différentes afin de pouvoir déterminer la position relative de l'équipement ou de l'enveloppe virtuelle dans l'espace.

Avantageusement, l'étape de détermination de l'enveloppe virtuelle peut comprendre une étape d'activation d'au moins un des équipements à commander afin de le rendre identifiable visuellement par l'utilisateur et une étape comprenant un pointage par l'utilisateur de l'objet de commande vers cet au moins un équipement et un appui de l'utilisateur sur l'objet de commande. Par exemple, pour commander des volets, il est possible de demander à l'utilisateur de pointer deux coins de la fenêtre, par exemple en haut à gauche et en bas à droite. L'enveloppe virtuelle délimite la zone de l'équipement à commander dans l'espace. Lorsque l'utilisateur pointe n' importe où sur la fenêtre, le système reconnaît que la zone pointée correspond au contrôle des volets.

Avantageusement, l'enveloppe virtuelle de l'au moins un équipement à commander peut comprendre au moins une partie de l'enveloppe physique de l'équipement à commander, de préférence toute l'enveloppe physique. Par exemple, l'enveloppe virtuelle d'une télévision peut alors comprendre au moins l'enveloppe physique de la télévision.

Alternativement et avantageusement, l'enveloppe virtuelle de l'au moins un équipement à commander peut ne comprendre aucun point de l'enveloppe physique de l'équipement à commander. Il est ainsi loisible de définir que l'équipement à commander, lorsque l'objet de commande pointe le cœur d'une cheminée d'un appartement, est le système de climatisation chaud/froid de l'appartement éventuellement situé dans une autre pièce que celle de la cheminée et non la cheminée pointée. L'utilisateur peut par exemple pointer la fenêtre pour avoir la météo extérieure affichée sur la télécommande. Il peut également commander des objets non directement visibles.

Avantageusement, le procédé selon l'invention peut comprendre une étape de déplacement d'un équipement à commander et une action d'un utilisateur sur l'objet de commande, l'action de l'utilisateur sur l'objet de commande étant suivie d'une nouvelle mise en œuvre d'un procédé selon l'invention afin de déterminer la nouvelle enveloppe virtuelle dudit équipement déplacé. Cette nouvelle mise en œuvre est de préférence réalisée de manière automatique dès qu'un test est vérifié. Le test peut par exemple comprendre une comparaison des distances précédemment déterminées entre tous les équipements et une nouvelle détermination des distances entre tous les équipements. Ainsi, lorsque l'utilisateur change une ampoule de place, sa nouvelle localisation est automatiquement prise en compte lors de l'appui sur une commande de la télécommande.

Alternativement, l'étape de détermination d'un équipement à commander peut comprendre une étape de détermination d'une probabilité qu'un équipement est l'équipement à commander. L'équipement à commander peut alors être déterminé à partir de cette probabilité. Cette détermination d'une probabilité peut avantageusement être mise en œuvre pour déterminer l'équipement à commander lorsque le sens pointé ne correspond à aucune enveloppe virtuelle ou correspond à plus d'une enveloppe virtuelle. Ainsi lorsque l'objet de commande est pointé dans un sens et si le sens pointé ne correspond à aucun équipement alors un algorithme identifie l'équipement à commander qui en est le plus proche dans l'espace ou le plus probable en fonction de la position de l'objet de commande et du sens pointé.

Avantageusement, le procédé selon l'invention peut comprendre une étape d'enrichissement contextuel d'un équipement à commander par des données d'enrichissement et en ce que l'étape de détermination d'un équipement à commander met en œuvre cet enrichissement contextuel. Cet enrichissement peut de préférence mettre en œuvre des données de grandeurs physiques, l'heure, la date, la position de l'objet de commande, des réponses de l'utilisateur à des questions, ou la répétitivité de commandes effectuées par l'utilisateur. Par exemple, l'enrichissement contextuel peut être mis en œuvre par une étape de demande à l'utilisateur de renseignement lié à l'équipement à commander. Cette demande peut être réalisée via une application mobile ou un logiciel de configuration sur un ordinateur. Le renseignement peut être de déterminer si l'ampoule est un plafonnier ou un lampadaire, ou de connaître l'étage auquel se situe chaque objet. Ainsi, cette information permet de déterminer la hauteur relative des unités de positionnement les unes par rapport aux autres.

De manière préférentielle, l'étape de détermination d'un équipement à commander peut comprendre une étape de détermination d'une probabilité. L'équipement à commander peut être alors déterminé à partir de cette probabilité. Par exemple, lorsqu'une direction et un sens déterminés pointent au moins deux enveloppes virtuelles, l'équipement déterminé peut être celui dont l'enveloppe virtuelle est la plus proche de l'objet de commande. Par exemple, lorsqu'une direction et un sens déterminés ne pointent vers aucune enveloppe virtuelle, la probabilité de chaque équipement est déterminée à partir de la distance entre son enveloppe virtuelle et la demi-droite définie par la direction. La notion de distance et de proximité dépend de la métrique utilisée. On peut utiliser une métrique telle que la plus petite distance euclidienne entre la droite définie par la direction déterminée et un point d'une enveloppe virtuelle. Ainsi, une étape de correction automatique est proposée : le procédé annule la commande préalablement émise et applique la commande à l'équipement à commander le plus probable.

L'invention a également pour objet un procédé de commande d'un équipement à commander parmi au moins un équipement à commander à partir d'un objet de commande,selon la revendication 11.

Ce procédé de commande selon l'invention comprend une étape de détermination d'un équipement à commander mettant en œuvre un procédé selon l'invention.

Avantageusement, le procédé de commande selon l'invention peut comprendre une étape d'émission par l'objet de commande de données de commande à destination de l'équipement à commander.

De préférence, l'étape de détermination de la position et de l'orientation de l'objet de commande et l'étape d'émission par l'objet de commande de données de commande à destination de l'équipement à commander peuvent mettre en œuvre une même technologie radio.

Avantageusement, le procédé de commande selon l'invention peut émettre automatiquement des commandes à destination d'un équipement en fonction de sa position et de son orientation dans l'espace.

Avantageusement, l'étape de détermination d'un équipement à commander peut être suivie d'une étape de confirmation et/ou d'une étape d'infirmation de l'équipement à commander ainsi déterminé.

De préférence, l'étape de confirmation et/ou l'étape d'infirmation peut être mise en œuvre par une interaction prédéfinie de l'utilisateur avec l'objet de commande. Lorsque l'utilisateur pointe un équipement à commander et active une commande, mais que la commande est envoyée à un autre objet, la télécommande permet à l'utilisateur d'indiquer que c'est le mauvais équipement à commander qui a été contrôlé via un bouton « correction » ou « help ». L'utilisateur appuie sur ce bouton et indique manuellement quel équipement à commander il a souhaité contrôler. Dans ce cas les différents procédés peuvent prendre en compte cette information afin de toujours contrôler l'équipement à commander souhaité par l'utilisateur lorsqu'il pointe dans cette direction.

Avantageusement et postérieurement à une étape d'infirmation de l'équipement à commander, une nouvelle étape de détermination d'un équipement à commander peut être automatiquement mise en œuvre par le procédé de commande selon l'invention. Le procédé peut comprendre en outre une étape d'annulation de la première émission émise par l'objet de commander.

Avantageusement, l'étape de confirmation et/ou l'étape d'infirmation peut mettre en œuvre une captation d'une grandeur physique. L'interaction prédéfinie est de préférence un déplacement prédéfini de l'équipement à commander effectué par l'utilisateur. Par exemple, l'utilisateur peut faire un geste spécifique avec l'objet de commande qui indique aux différents procédés que la commande exécutée n'est pas celle souhaitée par l'utilisateur. Ce geste peut être capté par un accéléromètre intégré à la télécommande, et peut par exemple être de secouer la télécommande.

Avantageusement, le procédé de commande selon l'invention peut comprendre une étape de découverte automatique pour découvrir chacun des équipements à commander.

Avantageusement, le procédé de commande selon l'invention peut comprendre une adaptation d'une interface de commande de l'objet de commande en fonction de l'équipement à commander.

Avantageusement, le procédé de commande selon l'invention peut comprendre une interprétation par une surface tactile d'au moins un mouvement d'au moins un doigt d'un utilisateur sur ladite surface. De préférence, les données de commande sont générées à partir de cette interprétation.

Avantageusement, le procédé de commande selon l'invention peut comprendre un affichage par l'interface de commande d'une information en fonction de l'équipement déterminé. Lorsque l'équipement à commander est un thermostat ou radiateur, il est affiché la température actuelle et/ou la température de consigne. Lorsque l'équipement à commander est une lampe ou ampoule, il est affiché l'état ON ou OFF - éteint ou allumé - de l'ampoule. Lorsque l'équipement à commander est une ampoule de couleur, il est affiché la couleur actuelle. Lorsque l'équipement à commander est un volet, il est affiché l'état des volets : ouverts ou fermés. Lorsque l'équipement à commander est un portail, il est affiché l'état ouvert ou fermé ou une vidéo d'une personne qui a sonné au portail. Lorsque l'équipement à commander est un four, il est affiché un temps de cuisson restant et/ou la température du four.

Lorsque l'objet de commande comprend un afficheur et lorsqu'il comprend une étape de détection, l'étape d'apprentissage est réalisée par une passerelle réseau. Ainsi, un hub jouant le rôle de passerelle peut détecter automatiquement tous les objets contrôlables connectés au même réseau informatique que le hub.

Lorsque l'objet de commande comprend un écran, l'apprentissage peut être réalisé directement sur l'écran de l'objet de commande.

Lorsqu'il comprend un afficheur et lorsqu'il comprend une étape de détection, l'étape d'apprentissage est réalisée via une application située sur un dispositif relié à un réseau. Ce peut être une application implémentée sur un ordinateur ou une application implémentée sur un smartphone ou tablette. Dans ces deux derniers cas, l'unité de commande qui peut être l'ordinateur, la tablette ou le smartphone est connectée avec fil, par une liaison de type câble USB ou sans-fil, pas une liaison de type WiFi ou Bluetooth, afin de pouvoir interagir pendant la phase d'apprentissage.

On appelle topologie un sous-ensemble maximal de l'ensemble des unités de positionnement tel que quelque soit une unité de positionnement de ladite topologie, sa position peut être déterminée, directement ou indirectement, par toute autre unité de positionnement de ladite topologie.

On peut ainsi définir deux topologies comme étant indépendantes lorsqu'il existe une unité de positionnement de la première topologie dont la position ne peut pas être connue, directement ou indirectement, par l'une quelconque des unités de positionnement de la deuxième topologie.

Selon une particularité de l'utilisation du procédé de commande, l'ensemble des unités de positionnement ne comprend qu'une seule topologie.

Selon une autre particularité de l'utilisation du procédé de commande, l'ensemble des unités de positionnement comprend au moins deux topologies.

De préférence, l'utilisation selon l'invention peut comprendre une détection d'une action prédéfinie par l'utilisateur. De préférence, cette détection est automatiquement mise en œuvre. Cette action peut être la prise en main de la télécommande par l'utilisateur. L'affichage de la télécommande s'adapte dynamiquement en temps réel dès que la télécommande est prise en main et son afficheur affiche les informations liées à tout ce qui est pointé.

De préférence, l'utilisation selon l'invention peut comprendre une étape de détection d'une grandeur physique telle que l'accélération de l'objet de commande. De préférence, cette détection est automatiquement mise en œuvre. Un accéléromètre peut ainsi détecter les mouvements de la télécommande et allumer l'affichage et/ou à l'inverse lorsque la télécommande est posée et ne bouge plus, alors l'affichage s'éteint automatiquement.

Avantageusement, l'utilisation selon l'invention peut comprendre une gestion d'un afficheur du dispositif de commande à partir de cette détection. Cette gestion peut être réalisée de manière automatique. Ainsi, lorsque l'utilisateur saisit l'objet de commande, la gestion de l'afficheur peut alimenter l'afficheur. Lorsque l'utilisateur pose l'objet de commande, la gestion de l'afficheur peut éteindre l'afficheur.

Avantageusement, l'utilisation selon l'invention peut comprendre une pluralité de mise en œuvre automatique du procédé de commande selon l'invention. Ainsi, l'objet de commande est apte à commander les équipements de façon continue en fonction de sa position et de son orientation. Dans le cas où l'objet de commande présente un afficheur, l'affichage affiché par l'afficheur est adapté automatiquement et/ou dynamiquement en fonction de l'équipement déterminé par l'objet de commande. Le déplacement de l'objet de commande entre deux pièces éloignées associé à une mise en œuvre automatique du procédé de commande selon l'invention présente en outre l'avantage de permettre un contrôle de deux équipements distants avec le même objet de commande lorsque ce dernier est déplacé d'une des deux pièces à l'autre, sans que lesdits deux équipements n'appartiennent nécessairement à la même topologie.

Avantageusement, l'utilisation selon l'invention peut comprendre une étape de définition de données d'habitudes. L'utilisation selon l'invention peut comprendre une pluralité de mise en œuvre du procédé de commande en fonction desdites données d'habitudes. Les données d'habitude peuvent être associées à un geste d'un utilisateur ou un appui sur l'objet de commande. Par exemple, lorsque l'utilisateur active une touche ou pointe en direction d'une zone de la pièce, toutes les commandes sont enchainées. On peut ainsi imaginer qu'un utilisateur souhaite contrôler toutes ses lampes en une fois, mais en pointant une zone précise de la pièce. Ceci lui évite avantageusement de devoir pointer chaque lampe de la pièce pour les contrôler individuellement.

Avantageusement, l'utilisation selon l'invention peut comprendre une étape d'apprentissage d'habitudes de commandes exécutées par l'utilisateur pour définir les données d'habitudes. L'utilisateur peut créer des macros, à l'aide du procédé d'apprentissage d'habitude. Les macros sont des enchainements de commandes lancées après une action unique de l'utilisateur. Par exemple, le procédé d'apprentissage d'habitude peut demander à l'utilisateur de pointer et d'effectuer toutes les commandes qu'il souhaite associer à cette macro et associe cet enchainement de commande à une touche ou à une zone de la pièce.

Avantageusement, l'étape d'apprentissage d'habitudes de commandes exécutées par l'utilisateur peut comprendre une étape d'enrichissement contextuel par des données d'enrichissement. Cet enrichissement contextuel mettant de préférence en œuvre des données de grandeurs physiques, l'heure, la date, la position de l'objet de commande, des réponses de l'utilisateur à des questions, ou la répétitivité de commandes effectuées par l'utilisateur. Les éléments contextuels peuvent être par exemple l'heure ou le jour de l'année ou encore la position de la télécommande. La prise en compte de ces éléments est utilisée pour améliorer la pertinence des macros ou commandes et ainsi prédire la volonté de l'utilisateur. Un exemple est l'ouverture de volet alors qu'un utilisateur pointe les volets et appuie sur une commande alors que c'est le matin. Un autre exemple est la détection par une étape du procédé d'utilisation d'un actionnement successif d'une pluralité d'équipement à commander à plusieurs reprises par l'utilisateur à l'intérieur d'une même plage horaire. Le procédé d'apprentissage d'habitude peut alors utiliser les résultats de cette étape de détection pour décider de l'actionnement de cette pluralité d'objets et ce uniquement lorsque l'élément contextuel de plage horaire est le même.

L'invention a également pour objet de proposer un dispositif de commande d'au moins un équipement à commander dans un espace par au moins un objet de commande transportable selon la revendication 16.

De préférence, le dispositif de commande selon l'invention comprend en outre une surface tactile et des moyens d'interprétation pour interpréter au moins un mouvement d'au moins un doigt d'un utilisateur sur cette surface tactile, les moyens d'émission étant en outre configurés pour générer la commande à partir de données provenant des moyens d'interprétation.

Avantageusement, le dispositif selon l'invention peut en outre comprendre un afficheur configuré pour afficher des informations relatives à l'équipement à commander ainsi déterminé.

Avantageusement, le dispositif selon l'invention peut comprendre un capteur de son et des moyens d'analyses configurés pour déterminer un résultat en fonction du son capté par le capteur de son et afficher ce résultat sur l'afficheur. Par exemple, lorsque l'objet de commande pointe une source de musique, le dispositif lance automatiquement une recherche de type Shazam^{®} de la musique en cours et affiche un résultat tel que le titre du morceau, le nom de l'album, ou encore l'interprète sur l'affichage.

L'invention a également pour objet de proposer un système comprenant :
- au moins un objet de commande transportable disposée dans un espace,
- au moins une unité de positionnement dans cet espace, l'au moins une unité de positionnement étant apte à déterminer la position de l'objet de commande et/ou sa position relative par rapport à d'autres unités de positionnement,
- un dispositif de commande d'au moins un équipement à commander selon l'invention.

Avantageusement, l'au moins une unité de positionnement peut être intégrée à un équipement à commander. L'équipement à commander peut être une ampoule connectée, une lampe, une douille de lampe, une prise murale, un interrupteur mural, un thermostat, un mécanisme ou interrupteur de volets roulants, etc.

Avantageusement, des moyens de communication compris dans l'objet de commande et/ou l'au moins une unité de positionnement et/ou le dispositif de commande sont configurés pour mettre en œuvre une même technologie radio. Dans ce cas, la communication de la commande pour commander peut aussi utiliser la même technologie radio que celle utilisée pour la localisation, par exemple la technologie UWB.

Avantageusement, l'au moins un dispositif de commande peut être intégré à l'au moins un objet de commande.

Avantageusement, le dispositif de commande peut être intégré à au moins une unité de positionnement.

Avantageusement, le dispositif de commande peut être intégré à l'équipement à commander.

Avantageusement, le système selon l'invention peut comprendre en outre une passerelle réseau.

De préférence, une passerelle réseau peut être configurée pour détecter automatiquement chacun des au moins un équipement à commander.

De préférence, une passerelle réseau peut comprendre le dispositif de commande, le dispositif de commande étant relié via cette passerelle réseau par une liaison filaire ou sans-fil à l'objet de commande et/ou à l'au moins une unité de positionnement.

De préférence, une passerelle réseau peut être configurée pour commander séquentiellement au moins une partie des équipements à commander. Ainsi, la passerelle réseau peut actionner chaque équipement à commander individuellement afin que l'utilisateur puisse l'identifier visuellement. Ce peut par exemple être le clignotement d'une ampoule, la montée et/ou l'abaissement de volets, etc.

Avantageusement, l'objet de commande peut être muni de moyens de stockage d'énergie rechargeable et le système peut en outre comprendre une base apte à recharger les moyens de stockage d'énergie.

Avantageusement, l'objet de commande est un téléphone comprenant les moyens d'émission du dispositif de commande.

De manière alternative, l'objet de commande peut comprendre un téléphone muni d'un accessoire, l'objet de commande comprenant les moyens d'émission du dispositif de commande. C'est le cas lorsqu'un accessoire additionnel est rajouté au smartphone : cet accessoire peut comporter la technologie nécessaire à la localisation indoor. La connexion physique au smartphone est réalisée soit par une prise de type jack, USB, lightning, soit en sans-fil via une technologie de type Bluetooth, BLE, Wifi, etc. Cet accessoire est solidaire du Smartphone ainsi la position du Smartphone peut être déterminé.

### Description des figures

D'autres avantages et particularités de l'invention apparaîtront à la lecture de la description détaillée de mises en œuvre et de modes de réalisation nullement limitatifs, au regard de dessins annexés sur lesquels :
- la figure 1 représente schématiquement un mode de réalisation général d'un procédé de détermination d'un équipement à commander selon l'invention ;
- la figure 2 représente schématiquement un premier mode de réalisation d'un procédé de détermination d'un équipement à commander selon l'invention ;
- la figure 3 représente schématiquement un deuxième mode de réalisation d'un procédé de détermination d'un équipement à commander selon l'invention ;
- la figure 4 représente schématiquement un système de commande selon l'invention de type « automatique » ;
- la figure 5 représente schématiquement un système de commande selon l'invention de type « manuel».

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

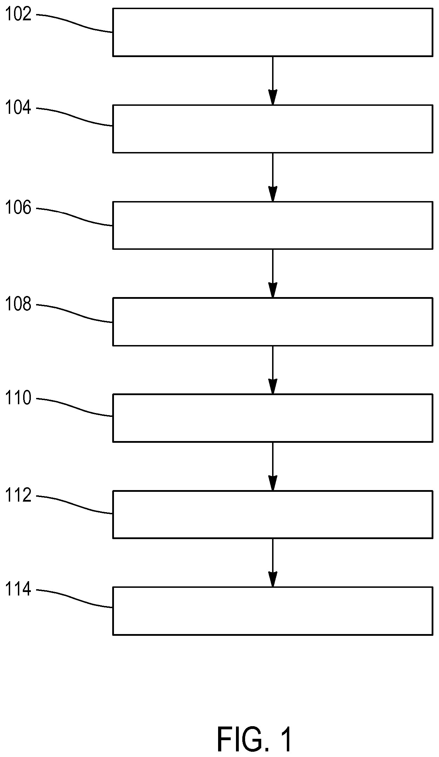

La figure 1 représente schématiquement un mode de réalisation général d'un procédé de détermination 100 d'un équipement à commander par un objet de commande disposé dans un espace comprenant des unités de positionnement aptes à déterminer leurs positions relatives les unes par rapport aux autres.

L'étape 102 est une étape de déploiement aléatoire de plusieurs nœuds dans un espace donné. Ces nœuds sont des équipements contrôlables, des équipements d'information ou des unités de positionnement.

L'étape 104 est une étape de mise en œuvre de techniques de localisation. Ces techniques sont la trilatération ou la triangulation à partir de données relatives à un signal reçu telles que l'angle d'arrivée (AOA pour l'anglais Angle Of Arrival), le temps d'arrivée (TOA, pour l'anglais Time Of Arrival), la différence de temps d'arrivée (TDOA, pour l'anglais Time Difference Of Arrival), la puissance reçue (RSSI, pour Received Signal Strenght Indication), la qualité du signal reçu (LQ, pour l'anglais « Link Quality »), ou encore la technique de la mesure du champ électromagnétique. Ces techniques peuvent être utilisées seules ou en combinaison avec des données provenant d'un accéléromètre, d'un magnétomètre ou d'une unité de détection de pression.

L'étape 106 est étape de mise en œuvre de techniques de détermination d'orientation par rapport aux nœuds. Le procédé met en œuvre une ou plusieurs techniques à partir de données relatives à un signal reçu telles que EMF, EMF, AOA, une transmission avec antenne directive ou la mise en œuvre d'un ou plusieurs capteurs tel accéléromètre, un magnétomètre ou un gyroscope.

A l'étape 108 qui est une étape optionnelle, il est déterminé une enveloppe virtuelle par l'utilisateur pour un équipement à commander et l'utilisateur détermine sa localisation par rapport aux nœuds.

A l'étape 110, le procédé détermine une zone virtuelle pointée par l'objet de commande.

A l'étape 112, le procédé met en œuvre une adaptation automatique de l'interface de contrôle de l'objet de commande (son affichage, son affichage tactile et/ou ses boutons) à l'équipement à commander sélectionné dans l'étape préalable : des informations associées à l'équipement à commander sont affichées sur l'objet de commande, des boutons de l'objet de commande sont disponibles pour l'utilisateur qui peut aussi, alternativement ou en combinaison, effectuer des actions.

A l'étape 114, une commande associée à l'action effectuée par l'utilisateur et envoyée à l'équipement à commander associé à la zone virtuelle pointée par l'objet de commande.

Il est maintenant décrit la détermination de la position des unités de localisation dans l'espace. Cette détermination est relative ou absolue : la position est dite relative lorsque les unités de positionnement sont positionnées les unes par rapport aux autres ; la position est dite absolue lorsque les unités de positon les unités de positionnement sont positionnées par rapport à un référentiel connu, par exemple à l'aide de la connaissance d'une position GPS. Plusieurs techniques de localisation sont possibles :
- une première technique met en œuvre un calcul des distances en utilisant un des procédés suivants ou une combinaison des deux:
   ∘ un premier procédé met en œuvre un calcul du temps de trajet d'un signal radio entre l'objet de commande et une unité de positionnement et entre les unités de positionnement,
   ∘ un deuxième procédé met en œuvre un calcul de la puissance du signal radio en réception. La réception est réalisée soit du côté de l'objet de commande, soit du côté unité de positionnement,
- une deuxième technique met en œuvre un calcul des angles de réception AOA et triangulation,
- une troisième technique met en œuvre une utilisation de champs électromagnétiques pour déterminer position et orientation dans l'espace,
- bien entendu, il est possible de combiner plusieurs techniques et d'utiliser une pluralité de capteurs afin d'améliorer la précision de la localisation. Il est aussi possible de rajouter des capteurs afin de faciliter la localisation des différentes unités de positionnement dans l'espace.

Il est par exemple possible de rajouter un capteur de pression dans chaque unité de positionnement. Ceci a pour avantage d'obtenir l'altitude de chaque unité de positionnement et de déterminer ainsi l'orientation de l'espace des unités de positionnement par rapport au référentiel terrestre.

Dans un premier cas, certaines unités de positionnement ont des positions connues (« with anchors ») par rapport à un référentiel (terrestre avec GPS ou autre). Plusieurs techniques de localisation sont alors possibles. Ceci permet d'obtenir une localisation absolue des unités de positionnement par rapport au référentiel.

Dans un deuxième cas, aucune unité de positionnement n'a de position connue (« anchor free ») par rapport à un référentiel (terrestre avec GPS ou autre). Plusieurs techniques de localisation sont alors possibles. Ceci permet d'obtenir une localisation relative des unités de positionnement entre elles.

Il est maintenant décrit la détermination de la position de l'objet de commande. Les unités de positionnement permettent de calculer les coordonnées de position de l'objet de commande dans l'espace. Les distances entre l'objet de commande et les unités de positionnement sont calculées et sont utilisées pour déterminer la localisation de l'objet de commande dans l'espace. Il est possible d'utiliser les mêmes techniques de positionnement que celles utilisées pour la détermination des positions des unités de positionnement. L'objet de commande portatif étant mobile, sa localisation est déterminée en temps réel, et tous ses mouvements sont calculés (tracking).

Il est maintenant décrit la détermination de l'orientation de l'objet de commande par rapport aux unités de positionnement.

Dans une première branche, l'orientation est déterminée par rapport au référentiel terrestre. Des capteurs, tels que des accéléromètres et magnétomètres, permettent de déterminer l'angle et l'orientation de l'objet de commande par rapport au référentiel terrestre.

Dans une seconde branche, l'orientation est déterminée par rapport à un référentiel connu : on peut par exemple utiliser des champs électromagnétiques pour déterminer position et orientation dans l'espace.

Lorsque le positionnement des unités de localisation n'est pas fait par rapport au même référentiel que l'orientation de l'objet de commande, il convient de lier les deux. Dans ce cas, il peut être demandé à l'utilisateur de pointer certaines unités de positionnement et d'appuyer sur un bouton de l'objet de commande pour capturer l'orientation de chaque unité de positionnement. Il est ainsi possible de lier l'orientation de l'objet de commande avec l'espace des unités de positionnement. Chaque équipement apte à être commandé peut s'activer afin que l'utilisateur sache quel équipement à commander ce dernier doit pointer. L'activation est rendue visible par le clignotement d'une ampoule, l'abaissement ou le montage des volets, etc.

En utilisant l'orientation et la localisation de l'objet dans l'espace de commande, il est possible de déterminer la direction pointée par l'objet de commande et ainsi d'identifier l'équipement à commander.

Il est maintenant décrit l'amélioration de la précision de la position de l'objet de commande.

Dans une première branche, la précision est améliorée par l'utilisation de l'angle de réception du signal de l'objet de commande par les unités de positionnement. Avantageusement, à nombre d'unités de positionnement équivalent, ceci permet d'obtenir une précision plus importante de la localisation de la l'objet de commande. De plus, ceci permet de triangulariser la position de la l'objet de commande en utilisant moins d'unités de positionnement : une au lieu de deux, deux au lieu de trois, etc.

Dans une deuxième branche, la précision est améliorée par ajout de capteurs additionnels dans l'objet de commande pour améliorer la précision du calcul d'angle: gyroscope, capteur de champ magnétique terrestre, etc.

Dans une troisième branche, la précision est améliorée par ajout de capteurs additionnels dans l'objet de commande permettant de donner des informations de mouvement et de déplacement améliorant le calcul de la géolocalisation de l'objet de commande dans l'espace : accéléromètre, gyroscope, capteur de champ magnétique terrestre, etc.

Dans une quatrième branche, la précision est améliorée par ajout d'un capteur de pression ou altitude pour déterminer par exemple l'altitude et/ou l'étage où se situe l'objet de commande dans un bâtiment à plusieurs étages.

Il est maintenant décrit la possibilité d'amélioration de la précision de l'identification de l'équipement à commander pointé par l'objet de commande.

Ceci est rendu possible par ajout d'un capteur de distance sur l'objet de commande : la distance entre l'objet de commande et l'équipement à commander pointé est calculé par le capteur de distance. Cette information permet de mieux déterminer l'équipement à commander pointé ou la zone pointée par l'objet de commande et d'éviter de commander un équipement à commander qui est dans le prolongement de la direction pointée dans la même pièce, voir dans une autre pièce.

Il est maintenant décrit la possibilité d'amélioration de la précision du système en utilisant une méthode contextuelle. Ceci est rendu possible en demandant à l'utilisateur de renseigner via une application mobile ou un logiciel de configuration sur ordinateur une indication contextuelle relative à un objet à commander. Par exemple, une indication contextuelle relative à une ampoule peut être de qualifier l'ampoule de plafonnier ou de lampadaire, ou/et d'indiquer l'étage auquel elle est située. Cette information peut être utilisée pour déterminer la hauteur relative des unités de positionnement les unes par rapport aux autres.

Il est maintenant décrit un ensemble d'équipement à commander pouvant être commandés : lampe ou prises ; volets roulants ; dispositif de musique ; thermostat ; portail ou serrure ; jouet tel qu'une voiture électrique ; machine a café, cheminée au gaz ; matériel audiovisuel tel que télévision, lecteur DVD ou BluRay, caméra ; matériel informatique ; équipements de sociétés tierces tels que Volets Somfy^{®}, Philips Hue^{®}, Nest thermostat^{®} ; alarme anti-intrusion, détecteur de fumée, détecteur de CO ; réveil et horloge ; équipement de cuisine tel que four, hotte, frigo, lavevaisselle.

La découverte des équipements à commander peut être réalisée soit par une passerelle qui détecte automatiquement tous les équipements à commander connectés au même réseau ; soit par un utilisateur qui rentre manuellement les équipements à commander qui doivent être contrôlés par le système.

La découverte des équipements à commander peut se faire directement sur l'écran de l'objet de commande si l'objet de commande comporte un écran. La découverte peut aussi se faire sur un ordinateur ou via une application sur Smartphone ou tablette. Dans ce cas, la télécommande et l'ordinateur, la tablette ou le Smartphone sont connectés avec (câble USB) ou sans fil (Wifi ou Bluetooth) afin de pouvoir interagir pendant la phase de découverte.

Dans un premier mode de découverte, dit plug & play, les équipements à commander comportent une puce de géolocalisation. Ainsi, leur localisation relative à l'objet de commande est connue : aucun apprentissage n'est nécessaire. Dès la première utilisation, le système détermine automatiquement l'équipement à commander qui doit être contrôlé dès que l'utilisateur le pointe. Il est aussi possible pour l'utilisateur de modifier : contrôler telle fonction ou équipement à commander, mais en pointant ailleurs. Le système génère une cartographie automatiquement de tous les équipements à commander. Il n'est pas besoin de rentrer une carte ou faire un « training ». Le système recalcule automatiquement les coordonnés des équipements à commander à chaque fois que l'utilisateur appuie sur une commande : aucune carte n'a besoin d'être stockée. Ainsi, si l'utilisateur change une ampoule de place, sa nouvelle localisation est automatiquement prise en compte lors de l'appui sur une commande de l'objet de commande. Alternativement, il est aussi possible de stocker une cartographie des équipements à commander en permanence, par exemple lorsqu'il y a beaucoup d'équipements à commander et que le système doit être très réactif lorsque l'utilisateur appuie sur une commande.

Dans un deuxième mode de découverte, dit automatique, les équipements à commander ne comportent pas de puce de géolocalisation. L'utilisateur entre dans le mode d'apprentissage automatique. La passerelle actionne chaque individuellement équipement à commander afin que l'utilisateur puisse l'identifier visuellement. Il est alors demandé à l'utilisateur de pointer l'équipement à commander qui est activé et d'appuyer sur un bouton de l'objet de commande ou sur l'écran tactile. Lorsque l'objet de commande n'a pas de capteur de distance, il peut être demandé à l'utilisateur de pointer plusieurs fois le même équipement à commander depuis plusieurs positions différentes afin que le système puisse géolocaliser la cible dans l'espace. La passerelle fait ainsi automatiquement le lien entre l'équipement à commander qu'il a actionné et ses coordonnées grâce à l'action de pointage de l'utilisateur. La passerelle actionne alors l'équipement à commander suivant. Le même procédé est mis en œuvre jusqu'à ce que tous les objets identifiés dans la maison aient été localisés par le système. Le système génère une cartographie automatiquement lorsque l'utilisateur pointe les équipements à commander. Un pointage unique est suffisant lorsque l'objet de commande a un capteur de distance.

Dans un troisième mode de découverte, dit manuel, il y a une association d'enveloppe virtuelle à des objets physique. Dans ce cas, l'enveloppe virtuelle ne comprend pas l'équipement à commander physique. Ce peut être le cas lorsqu'un utilisateur souhaite pointer la cheminée pour contrôler le thermostat ou encore pointer la fenêtre pour connaître la météo extérieure et que le résultat soit affiché sur l'objet de commande. Ce mode est également mis en œuvre lorsque l'utilisateur souhaite contrôler une nouvelle fonction qui n'a pas été automatiquement détectée par le système, ou lorsque l'utilisateur souhaite modifier les réglages pour un équipement à commander. L'utilisateur peut alors contrôler un équipement à commander connecté ou une fonction en pointant une autre zone ou un autre équipement à commander. Dans ce cas, l'utilisateur entre dans le mode d'apprentissage manuel et pointe sur la zone souhaitée et indique au système l'équipement à commander qu'il souhaite commander à chaque fois qu'il pointe cette zone. Par exemple, l'utilisateur peut souhaiter contrôler la température dans la pièce en pointant sur la cheminée ou un radiateur au lieu de pointer sur le thermostat qui se situe dans une autre pièce. Le système génère une cartographie automatiquement. Un pointage unique est suffisant lorsque l'objet de commande a un capteur de distance.

Dans un quatrième mode d'apprentissage, dit de macro, l'utilisateur peut créer des macros. Une macro est un enchainement de commandes exécutées après une action unique de l'utilisateur. L'utilisateur entre dans le mode d'apprentissage de macro : il pointe et effectue toutes les commandes qu'il souhaite associer à cette macro et associe cet enchainement de commande à une touche ou à une zone de la pièce. Ainsi, toutes les commandes sont exécutées par la passerelle lorsque l'utilisateur active la macro. La macro est activée soit en appuyant sur une touche de macro, soit en pointant la zone associée à cette macro. Par exemple, l'utilisateur peut souhaiter contrôler toutes ses lampes à la fois en pointant une zone précise de la pièce pour lui éviter de devoir pointer chaque lampe de la pièce pour les contrôler individuellement.

Il est maintenant décrit des procédés de calibration et de gestion d'erreur.

Selon une première branche, il est proposé un algorithme d'apprentissage. Un algorithme d'apprentissage permet d'améliorer la fiabilité du système à chaque fois qu'un équipement à commander pointé est commandé. Le système enregistre alors les coordonnées de l'équipement à commander et ajoute ses nouvelles coordonnées à une base de données. Une fenêtre a par exemple une surface assez importante et un utilisateur peut pointer la fenêtre sans que cela soit toujours au même endroit. Il est alors possible de demander à l'utilisateur de pointer une ou plusieurs fois l'équipement à commander en des points différents de l'équipement afin de calibrer le système grâce à l'algorithme d'apprentissage. Par exemple, pour commander des volets, il est possible de demander à l'utilisateur de pointer plusieurs coins de la fenêtre en haut à gauche, en bas à droite. Le système apprend ainsi à délimiter la zone de l'équipement à commander dans l'espace. Lorsque l'utilisateur pointe n'importe quel point de la fenêtre, le système reconnaît que la zone pointée correspond au contrôle des volets.

Selon une deuxième branche, il est proposé un algorithme de tolérance. Une certaine marge de tolérance est insérée dans le système afin que le système identifie l'équipement à commander que l'utilisateur souhaite commander même si l'utilisateur ne pointe pas parfaitement l'équipement à commander. Ainsi si le résultat de la localisation de l'équipement à commander pointé ne correspond pas exactement aux coordonnées enregistrées dans la base de données, mais en est proche, le système valide tout de même la commande pour cet équipement à commander.

Selon une troisième branche, il est proposé un algorithme de probabilité. Cet algorithme permet de déterminer l'équipement à commander le plus probable entre plusieurs possibilités. Lorsque l'utilisateur pointe dans une direction pour commander un équipement à commander et que la direction pointée ne correspond à aucune coordonnée ou à plusieurs coordonnées de la base de données, l'algorithme identifie l'équipement à commander le plus probable en fonction de différentes données par exemple comme étant celui le plus proche de l'utilisateur et de l'objet de commande.

Selon une quatrième branche, il est proposé un algorithme de gestion d'erreur. Lorsque l'utilisateur pointe un équipement à commander et active une commande, mais que la commande est envoyée à un autre équipement à commander, l'objet de commande comprend un bouton « correction » ou « help » qui permet à l'utilisateur d'indiquer que c'est le mauvais équipement à commander qui a été commandé. L'utilisateur appuie sur ce bouton et indique manuellement l'équipement à commander qu'il souhaite contrôler. Dans ce cas les différents algorithmes prennent en compte cette information afin de toujours contrôler l'équipement à commander souhaité par l'utilisateur lorsqu'il pointe dans cette direction. En lieu et place du bouton « correction » ou « help », l'utilisateur peut faire un geste spécifique avec l'objet de commande qui indique au système que la commande exécutée n'est pas celle souhaitée par l'utilisateur. Ce geste est capté par un accéléromètre intégré à l'objet de commande. Ce geste peut être par exemple de secouer l'objet de commande. Dans ce cas, le système annule la commande et applique la commande au deuxième équipement à commander le plus probable.

Selon une cinquième branche, il est proposé un algorithme d'apprentissage de macro ou habitude. Cet algorithme permet de détecter des schémas récurrents de commande de l'utilisateur. Une fois détecté un schéma récurrent, la passerelle peut décider d'enchainer automatiquement les commandes sous forme de macro sans que l'utilisateur n'ait à le faire. Par exemple, un schéma récurrent peut être l'allumage consécutif de deux lampes et la fermeture d'un volet du salon au même moment. Après plusieurs récurrences, l'algorithme apprend que l'utilisateur souhaite toujours allumer ces deux lampes et fermer le volet en même temps. La passerelle peut alors décider de toujours allumer la deuxième lampe et de fermer le volet dès que l'utilisateur allume la première lampe.

Selon une sous branche de cette cinquième branche, il peut être pris en compte certains éléments contextuels tels que l'heure, le jour ou encore la position de l'objet de commande pour améliorer la pertinence des macros ou commandes et ainsi prédire la volonté de l'utilisateur. Par exemple, lorsque l'utilisateur pointe les volets et appuie sur une commande et que c'est le matin, l'algorithme détermine que l'utilisateur souhaite ouvrir les volets. Si à plusieurs reprises, l'utilisateur actionne trois équipements à commander successivement toujours dans la même plage horaire, alors l'algorithme peut décider de créer une macro automatique qui actionne les trois équipements à commander à la fois, mais uniquement dans cette même plage horaire.

Il est maintenant décrit un découpage système.

Le système comprend optionnellement une passerelle. La passerelle est un élément qui centralise la position relative des unités de positionnement et de l'objet de commande, et reçoit les commandes de l'utilisateur et comprend un dispositif pour déterminer ce qui doit être commandé en fonction de la position relative de tous les éléments et des paramètres de pointage. Ce dispositif de détermination peut se situer soit directement dans l'objet de commande soit dans une des unités de positionnement, soit dans une passerelle séparée.

Les unités de positionnement peuvent être branchées sur secteur ou sur batterie. Dans ce cas, elles n'ont que ce rôle et aucune d'autre fonction. Alternativement, les unités de positionnement peuvent être intégrées à des équipements contrôlables. Dans ce cas, la communication de la commande pour commander peut utiliser la même technologie que celle utilisée pour la localisation (UWB ou autre). L'apprentissage n'est pas indispensable dans ce cas, car le système connaît la position relative des équipements à commander contrôlables par rapport à l'objet de commande.

L'objet de contrôle peut être soit une télécommande, soit un tag, soit un Smartphone.

Une télécommande peut comprendre :
- une électronique de géolocalisation indoor ;
- un capteur d'angle tel qu'un gyroscope, un capteur de mouvement tel qu'un accéléromètre. L'accéléromètre permet également de mettre la télécommande en mode veille quand aucun mouvement n'est détecté afin d'économiser de la batterie ;
- un capteur de champs magnétiques ;
- un capteur de pression pour déterminer la hauteur dans une maison ou immeuble à plusieurs étages, un capteur de distance pour calculer la distance entre la télécommande et l'équipement à commander pointé ;
- un affichage configuré pour afficher automatiquement des données en fonction de l'équipement à commander ou de la zone pointée. Les données peuvent être :
   ∘ la température actuelle ou de consigne pour un thermostat ou un radiateur ;
   ∘ l'état d'une lampe ou d'une ampoule, éteinte ou allumée ;
   ∘ la couleur actuelle d'une lampe RGB ;
   ∘ l'état de volets, ouverts ou fermés ;
   ∘ le volume, le titre de chansons, de playlist, ou encore le nom de la radio dans le cas d'une source musicale ;
   ∘ l'état ouvert ou fermé ou encore une vidéo de la personne qui a sonné au portail dans le cas d'un portail, l'afficheur peut afficher ;
   ∘ le temps de cuisson restant ou bien la température actuelle du four lorsqu'un utilisateur pointe un four.

Lorsqu'une source de musique est pointée, une recherche de type Shazam de la musique en cours est automatiquement générée et le résultat est affiché sur l'affichage. Le résultat peut être le titre du morceau, le nom de l'album ou encore l'interprète. Dans ce cas, la télécommande intègre un capteur de son.

La télécommande peut être sans affichage.

La télécommande est configurée pour que son affichage s'adapte dynamiquement en temps réel dès que la télécommande est prise en main. Elle affiche les informations liées à tout ce qui est pointé. Un accéléromètre permet de détecter les mouvements de la télécommande et d'allumer son affichage, et à l'inverse d'éteindre sont affichage lorsque la télécommande est posée et ne bouge plus.

La télécommande peut être alimentée par des piles que l'utilisateur change ou par des piles rechargeables. Dans ce dernier cas, l'utilisateur met la télécommande sur une base pour recharger les piles de la télécommande.

L'objet de commande peut être un tag. Dans le cas du tag, seuls les capteurs servant à la localisation sont présents. L'utilisateur garde le tag sur lui quand il se déplace dans une maison par exemple afin que lumière et musique le suivent. Dans ce cas de figure, l'utilisateur ne pointe aucun équipement à commander, c'est une commande passive.

L'objet de commande peut être un smartphone :
- soit le smartphone intègre une technologie de géolocalisation indoor et les autres capteurs nécessaires pour le calcul d'angle et de distance ;
- soit un accessoire additionnel est ajouté au smartphone : cet accessoire comporte la technologie nécessaire à la géolocalisation indoor, et se connecte soit physiquement au Smartphone (prise jack, usb, lightning, etc.), soit en sans-fil via Bluetooth, BLE, Wifi, etc. Cet accessoire est solidaire du smartphone de sorte que la position du smartphone peut être déterminée.

Il est maintenant décrit des commandes.

Les commandes peuvent être réalisées avec un écran tactile selon les matrices de commandes ci-après décrites.

Alternativement ou en combinaison avec l'écran tactile, les commandes peuvent être implémentées sous la forme de boutons tels que
- des boutons + et -,
- des boutons ON/OFF,
- des boutons Change colors,
- des bouton 1, 2, 3, A, B, C etc. Ces boutons peuvent permettre d'activer :
   ∘ des macros ;
   ∘ ou des ambiance préenregistrées. Une ambiance peut être des lumières ton chaud et tamisées, des lumières ton froid et fortes, une fermeture des volets et un abaissement de l'intensité des lumières pour regarder un film, l'extinction de toutes les lumières et l'abaissement de tous les volets, etc.

Les commandes sont soient actives, soient passives.

Dans le cas de commande active, l'utilisateur pointe un équipement à commander pour commander des équipements à commander directement visibles ou commander des équipements à commander non directement visible. Un exemple de commande d'équipement à commander non visible est celui d'une lampe du salon depuis la cuisine ou encore la commande de tous les volets roulants de la maison.

Dans le cas de commande passive, l'utilisateur se déplace avec la télécommande ou un tag dans la poche. Les équipements à commander sont activés automatiquement en fonction de la localisation de la télécommande ou du tag. Les lumières et la musique s'allument automatiquement en fonction de la position de la télécommande ou du tag et suivent ainsi l'utilisateur de pièce en pièce en fonction de sa localisation. Par exemple, les lumières et la musique des pièces où l'utilisateur ne se trouve pas s'éteignent, et inversement s'allument dans la pièce ou il se trouve. Dans un autre exemple, le portail du garage s'ouvre lorsque l'utilisateur s'approche du portail avec le tag sur son porte-clés. Dans encore un autre exemple, les volets se ferment, les lumières s'éteignent et le portail se referme lorsque l'utilisateur s'éloigne de la maison.

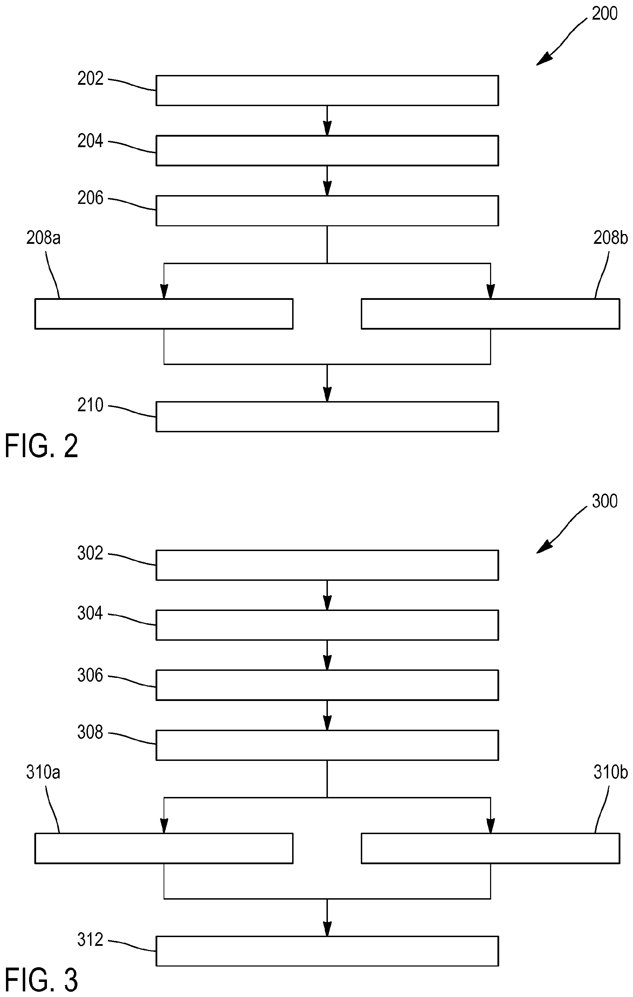

La figure 2 représente schématiquement un premier mode de réalisation d'un procédé de détermination 200 d'un équipement à commander par un objet de commande disposé dans un espace comprenant des unités de positionnement aptes à déterminer leurs positions relatives les unes par rapport aux autres.

L'étape 202 est une étape de déploiement aléatoire d'unités de positionnement. Certaines de ces unités de positionnement sont aptes à connaître leurs positions absolues par rapport à la terre et sont alors appelées unités d'ancrage.

L'étape 204 est une étape de mise en œuvre de techniques de localisation. Ces techniques sont la trilatération ou la triangulation à partir de données relatives à un signal reçu telles que l'angle d'arrivée (AOA pour l'anglais Angle Of Arrival), le temps d'arrivée (TOA, pour l'anglais Time Of Arrival), la différence de temps d'arrivée (TDOA, pour l'anglais Time Difference Of Arrival), la puissance reçue (RSSI, pour Received Signal Strenght Indication), la qualité du signal reçu (LQ, pour l'anglais « Link Quality »), ou encore la technique de la mesure du champ électromagnétique (EMF, pour l'anglais « electromagnetic field »).

A l'étape de résultat intermédiaire 206, les positions de toutes les unités de localisation sont connues par rapport aux unités d'ancrage. Les positions absolues de toutes les unités de localisation sont donc connues par rapport à la terre.

Postérieurement à l'étape 206, le procédé met en œuvre sélectivement l'une ou l'autre des deux étapes :
- à l'étape 208a, le procédé met en œuvre des capteurs d'orientation par rapport à l'espace formé par les unités de positionnement. Ces capteurs peuvent mettre en œuvre des techniques telles que EMF, AOA, transmission directive ;
- à l'étape 208b, le procédé met en œuvre des capteurs d'orientation absolue par rapport à la terre. Ces capteurs sont par exemple des accéléromètres ou encore des magnétomètres.

Postérieurement aux étapes 208a et 208b, le procédé met en œuvre l'étape de résultat intermédiaire 210.

A l'étape 210, l'orientation de l'objet de commande par rapport à la terre est connue. L'orientation de l'objet de commande par rapport aux nœuds s'en déduit donc facilement.

Ainsi, le procédé selon la figure 2 met en œuvre une étape de détermination de la position et de l'orientation de l'objet de commande dans l'espace à partir des positions des unités de positionnement.

Une étape de détermination d'un sens pointé par l'objet de commande à partir de la position et de l'orientation de l'objet de commande ainsi déterminées est ensuite mise en ouvre. Il suffit par exemple de connaître la position de deux points de l'objet de commande relativement à la position de l'objet de commande pour déterminer le sens pointé par l'objet de commande.

Le procédé met ensuite en œuvre une étape de détermination d'un équipement à commander à partir du sens ainsi déterminé. Différentes possibilités de détermination de l'équipement à commander à partir du sens ainsi déterminé seront décrites par la suite.

La figure 3 représente schématiquement un deuxième mode de réalisation d'un procédé de détermination 300 d'un équipement à commander par un objet de commande disposé dans un espace comprenant des unités de positionnement aptes à déterminer leurs positions relatives les unes par rapport aux autres.

L'étape 302 est une étape de déploiement aléatoire d'unités de positionnement. Aucune de ces unités de positionnement ne connait sa position absolue par rapport à la terre.

L'étape 304 est une étape de mise en œuvre de techniques de localisation sans ancrage choisie telle que la trilatération ou la triangulation à partir de données relatives à un signal reçu telles que l'angle d'arrivée (AOA pour l'anglais Angle Of Arrival), le temps d'arrivée (TOA, pour l'anglais Time Of Arrival), la différence de temps d'arrivée (TDAO, pour l'anglais Time Difference Of Arrival), la puissance reçue (RSSI, pour Received Signal Strenght Indication), LQ, EMF, ...

A l'étape 306, les positions de toutes les unités de localisation sont déterminées les unes par rapport aux autres dans l'espace relatif des unités de localisation.

A l'étape 308, l'utilisateur pointe l'objet de commande en direction de chacune des unités de localisation, l'une après l'autre.

Postérieurement à l'étape 308, le procédé met en œuvre sélectivement deux étapes :
- à l'étape 308a, le procédé met en œuvre des capteurs d'orientation par rapport à l'espace formé par les unités de positionnement. Ces capteurs peuvent mettre en œuvre des techniques telles que EMF, AOA, transmission directive ;
- à l'étape 308b, le procédé met en œuvre des capteurs d'orientation absolue par rapport à la terre. Ces capteurs sont par exemple des accéléromètres ou encore des magnétomètres.

Postérieurement aux étapes 308a et 308b, le procédé met en œuvre l'étape 310.

A l'étape 310, l'orientation de l'objet de commande par rapport à l'espace des unités de localisation est déduite.

Ainsi, le procédé selon la figure 3 met en œuvre une étape de détermination de la position et de l'orientation de l'objet de commande dans l'espace à partir des positions des unités de positionnement.

Une étape de détermination d'un sens pointé par l'objet de commande à partir de la position et de l'orientation de l'objet de commande ainsi déterminées est ensuite mise en ouvre. Il suffit par exemple de connaître la position de deux points de l'objet de commande relativement à la position de l'objet de commande pour déterminer le sens pointé par l'objet de commande.

Le procédé met ensuite en œuvre une étape de détermination d'un équipement à commander à partir du sens ainsi déterminé. Différentes possibilités de détermination de l'équipement à commander à partir du sens ainsi déterminé sont décrites par la suite.

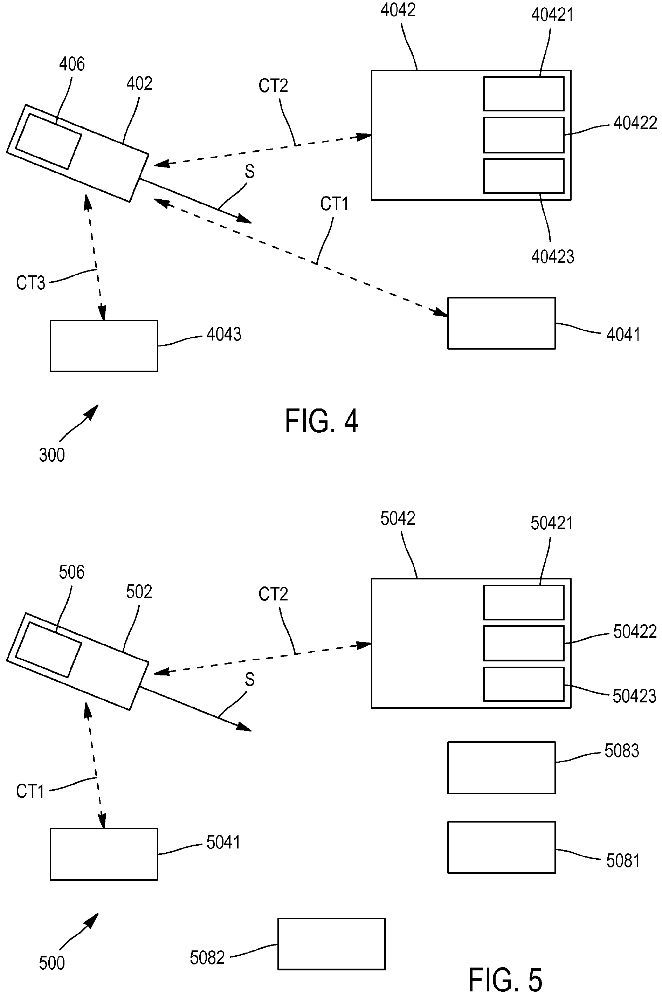

La figure 4 illustre un mode de réalisation d'un système de commande 400 selon l'invention.

Le système de commande 400 comprend :
- un objet de commande 402 disposée dans un espace,
- trois unités de positionnement 4041, 4042, 4043 dans cet espace.

Les trois unités de positionnement 4041, 4042, 4043 sont aptes à déterminer leurs positions relatives les unes par rapport aux autres. De plus, chacune des unités de positionnement est un équipement à commander.

L'unité de positionnement 4042 comprend :
- un processeur 40421,
- des moyens de communication 40422 reliés au processeur 40421, et
- des moyens de positionnement 40423 reliés au processeur 4021.

Chacune des unités de positionnement comprend des équipements similaires aux équipements de l'unité de positionnement 4042. Les moyens de communication respectifs des unités de positionnement sont configurés pour échanger entre eux des données d'information. Ces moyens de communication sont en outre chacun configurés pour échanger des données d'information avec l'objet de commande.

L'objet de commande 402 comprend un dispositif de commande 406 d'au moins un équipement à commander selon l'invention et un moyen de communication. L'objet de commande 402 comprend également un écran d'affichage tactile et/ou des boutons de l'objet de commande. Le dispositif 406 comprend des moyens agencés pour déterminer des positions relatives dans l'espace des trois unités de positionnement,
- des moyens de détermination de la position et de l'orientation de l'objet de commande 402 dans l'espace à partir des positions des unités de positionnement déterminées,
- des moyens de détermination d'un sens pointé S par l'objet de commande 402 à partir de la position et de l'orientation de cet objet de commande ainsi déterminées.

Ainsi, le dispositif de commande 406 est configuré pour mettre en œuvre les procédés de détermination d'un équipement à commander et de commande d'un équipement selon l'invention.

Il a été décrit ci-dessus en référence aux deux premières figures deux modes de réalisation pour :
- déterminer la position et de l'orientation de l'objet de commande 402 dans l'espace à partir des positions des unités de positionnement, et
- déterminer un sens pointé S par l'objet de commande 402 à partir de la position et de l'orientation de l'objet de commande ainsi déterminées.
Différents échanges sont réalisés entre le dispositif de commande et les unités de positionnement, ce qui est illustré par les flèches CT1, CT2 et CT3 sur la figure 4.

Dans ce mode de réalisation de type « plug and play », les équipements à commander comprennent ainsi les unités de positionnement. Ainsi, aucun apprentissage de la position de l'équipement à commander n'est nécessaire. La localisation relative à l'objet de commande est connue. Dès la première utilisation, le système connaît automatiquement quel équipement doit être contrôlé dès que le sens pointé S par l'objet de commande le pointe.

Le système génère une cartographie automatiquement de tous les équipements contrôlables. Le système recalcule automatiquement les enveloppes virtuelles des équipements à commander à chaque fois que l'utilisateur met en ouvre une fonction de l'objet de commande et aucune carte n'a besoin d'être stockée. Par exemple, si l'utilisateur change une ampoule de place, sa nouvelle localisation est automatiquement prise en compte lors de l'appui sur la touche de l'objet de commande.

Alternativement, il est aussi possible de stocker une cartographie des équipements à commander en permanence. Ceci peut être avantageux lorsqu'un grand nombre d'équipements à commander sont présents et qu'une forte réactivité du système est attendue.

La figure 5 illustre un deuxième mode de réalisation d'un système de commande 500 selon l'invention.

Le système de commande 500 comprend :
- un l'objet de commande 502 disposée dans un espace,
- deux unités de positionnement 5041, 5042 dans cet espace ; et
- trois équipements à commander 5081, 5082, 5083.

Les deux unités de positionnement 5041 et 5042 sont aptes à déterminer leurs positions relatives l'une par rapport à l'autre. Aucune de ces unités de positionnement n'est un équipement à commander.

L'unité de positionnement 5042 comprend :
- un processeur 50421,
- des moyens de communication 50422 reliés au processeur 50421, et
- des moyens de positionnement 50423 reliés au processeur 5021.

Chacune des unités de positionnement comprend des équipements similaires aux équipements de l'unité de positionnement 5042. Les moyens de communication respectifs des unités de positionnement 5041 et 5042 sont configurés pour échanger entre eux des données d'information.

L'objet de commande 502 comprend un dispositif de commande 506 d'au moins un équipement à commander selon l'invention. Le dispositif 506 comprend des moyens agencés pour déterminer des positions relatives dans l'espace des trois unités de positionnement,
- des moyens de détermination de la position et de l'orientation de l'objet de commande 502 dans l'espace à partir des positions des unités de positionnement 5041 et 5042 déterminées,
- des moyens de détermination d'un sens pointé S par l'objet de commande 502 à partir de la position et de l'orientation de cet objet de commande ainsi déterminées.

Ainsi, le dispositif de commande 506 est configuré pour mettre en œuvre les procédés de détermination d'un équipement à commander et de commande d'un équipement selon l'invention.

Il a été décrit ci-dessus en référence aux deux premières figures deux modes de réalisation pour :
- déterminer la position et de l'orientation de l'objet de commande 402 dans l'espace à partir des positions des unités de positionnement, et
- déterminer un sens pointé S par l'objet de commande 502 à partir de la position et de l'orientation de l'objet de commande ainsi déterminées.

Différents échanges sont réalisés entre le dispositif de commande et les unités de positionnement, ce qui est illustré par les flèches CT1, CT2 et CT3 sur la figure 5.

Dans ce mode de réalisation de type automatique, les équipements à commander 5081, 5082, 5083 ne comportent pas d'unité de géolocalisation. Il est demandé à un utilisateur du dispositif de commande 406 de mettre en œuvre un mode d'apprentissage automatique. Dans ce mode d'apprentissage, le système selon l'invention actionne séquentiellement chacun des équipements à commander 4081, 4082, 4083 individuellement afin que l'utilisateur puisse identifier visuellement cet équipement.

Pour chaque équipement à commander actionné par le système, l'utilisateur doit pointer plusieurs fois à partir de différents couples de position/sens, à l'aide de l'objet de commande 502, l'enveloppe virtuelle de cet équipement à commander 5081, 5082, 5083 et exécuter une action particulière sur l'objet de commande, par exemple appuyer sur un bouton de l'objet de commande ou sur un écran tactile de ce dernier.

Lorsque l'objet de commande possède un capteur de distance, la connaissance d'un seul couple position/sens est nécessaire au système.

Le système apprend ainsi à faire un lien entre l'équipement à commander et une partie d'enveloppe virtuelle associée à l'équipement à commander ainsi définie par l'utilisation.

Le système actionne alors l'équipement à commander suivant et ainsi de suite jusqu'à ce que tous les équipements à commander identifiés dans la maison soient localisés par le système.

Le système génère une cartographie automatiquement lorsque l'utilisateur pointe des équipements à commander. La cartographie doit être conservée pour ne pas perdre l'apprentissage de la localisation des enveloppes virtuelles.

Ainsi, l'enveloppe virtuelle d'au moins un équipement à commander est définie à partir d'une pluralité de détermination de position et d'orientation de l'objet de commande dans l'espace à partir des positions des unités de positionnement, et d'une pluralité de déterminations de sens pointés par l'objet de commande à partir de pluralité de positions et d'orientations de l'objet de commande ainsi déterminées.

Comme cela est entendu à la lumière de la description de la figure 5, les unités de positionnement ne jouent alors que le rôle d'unités de positionnement.

En référence à la figure 4, les unités de positionnement sont intégrées aux équipements à commander. En ce cas, la commande de l'équipement à commander peut avantageusement mettre en œuvre la même technologie pour communiquer que celle utilisée pour la localisation. On pourra avantageusement utiliser une technologie telle que UWB (pour l'anglais « Ultra Wide Band »).

Il est maintenant décrit plus en détail une étape de détermination d'un équipement à commander à partir du sens ainsi déterminé par un dispositif de commande selon l'invention.

L'équipement à commander est celui qui est associé à l'enveloppe virtuelle la plus proche de l'axe pointé par le sens S de l'objet de commande déterminé par le dispositif de commande.

Lorsque le sens pointé par l'objet de commande correspond à plusieurs possibilités d'enveloppe virtuelle d'équipement à commander, l'enveloppe virtuelle la plus probable est choisie : L'enveloppe virtuelle la plus probablement pointée est l'enveloppe virtuelle la plus proche dans l'espace de l'objet de commande (donc de l'utilisateur).

Par ailleurs, lorsque l'équipement à commander déterminé par le système à partir du sens de l'objet de commande est considéré comme incorrect par l'utilisateur, l'utilisateur peut indiquer que c'est un mauvais équipement à commander qui a été déterminé. Dans ce cas, des algorithmes de gestion de l'enveloppe virtuelle associée à cet équipement prennent en compte cette information afin de toujours contrôler cet équipement lorsque l'utilisateur pointe dans cette direction. Dans ce cas, le système peut automatiquement annuler la première commande que l'utilisateur estime comme erronée et applique la même commande à la deuxième enveloppe virtuelle la plus probable après la première.

Afin d'indiquer que la commande est erronée, l'utilisateur peut soit appuyer sur un bouton (physique ou zone tactile), soit faire un geste spécifique avec l'objet de commande qui sera capté par un capteur type accéléromètre et interprété par l'objet de commande.

L'équipement à commander peut aussi être associé à une ou plusieurs autres enveloppes virtuelles. Pour cela, le système met en œuvre un mode d'apprentissage de routine. Ainsi, le système peut détecter qu'un utilisateur a pour habitude d'allumer deux lampes et de fermer un volet du salon dans un court laps de temps. Le système commande alors l'allumage de l'autre lampe et la fermeture du volet dès lors qu'il a déterminé à partir du sens pointé par l'objet de commande que l'équipement à commander est l'une des deux lampes.

Une enveloppe virtuelle est définie comme une zone de l'espace des unités de positionnement associée à un équipement à commander. Différentes possibilités de détermination d'une enveloppe virtuelle sont maintenant décrites.

L'enveloppe virtuelle est définie en partie par la mise en œuvre d'un algorithme d'apprentissage. Un algorithme d'apprentissage permet d'améliorer la fiabilité du système à chaque fois qu'un équipement est commandé. Le système enregistre des informations relatives au sens déterminé de l'objet de commande et augmente l'enveloppe virtuelle de l'équipement à commander de ces informations. Une définition d'enveloppe virtuelle d'un équipement à commander est possible par interaction avec un utilisateur. Par exemple, pour commander des volets, il est possible de demander à l'utilisateur de pointer plusieurs coins de la fenêtre en haut à gauche, en bas à droite. Le système apprend ainsi à délimiter l'enveloppe virtuelle de la fenêtre dans l'espace. Lorsque l'utilisateur pointe n'importe où sur la fenêtre, c'est à dire à l'intérieur de l'enveloppe virtuelle relative aux volets, le système reconnaît que la zone pointée correspond à un contrôle des volets.

L'enveloppe virtuelle est également définie par la mise en œuvre d'un algorithme de tolérance. L'algorithme de tolérance augmente le volume de l'enveloppe virtuelle précédemment définie.

Dans un mode de réalisation de l'objet de commande, celle-ci comprend des boutons et un écran d'affichage. L'interface de commande de l'objet de commande s'adapte en fonction de l'équipement à commander. L'objet de commande comprend :
- des boutons + et - pour augmenter ou réduire respectivement une intensité relative à l'équipement à commander, par exemple le volume sonore ou l'intensité lumineuse,
- des boutons ON, OFF pour allumer ou éteindre respectivement l'équipement à commander,
- des boutons de changement de couleur, par exemple pour changer la couleur d'une lampe,
- des boutons pour commander des macros, par exemple pour commander une pluralité d'équipements ou encore commander des ambiances préenregistrées telles que des lumières à ton chaud et tamisées, des lumières à ton froid et fortes, une fermeture de volets et un abaissement d'intensité de lumière pour regarder un film, une séquence d'extinction de toutes les lumières et la fermeture de tous les volets, etc.

Bien entendu, d'autres modes de réalisation de l'objet de commande sont imaginés tels que la mise en œuvre d'une surface tactile. L'interface de commande de l'objet de commande et la commande elle-même s'adaptent en fonction de l'équipement à commander. La commande s'adapte également en fonction du nombre de doigts utilisé (1 doigt, 2 doigts, 3 doigts...) et du mouvement effectué avec ces doigts sur la surface tactile (de bas en haut, de gauche à droite, etc.). Ainsi, la commande communiquée pour commander le ou les équipements commandés s'adapte en fonction de la combinaison de la zone pointée par l'objet de commande et des mouvements des doigts faits sur la surface tactile.

Bien entendu, l'utilisateur peut configurer l'objet de commande comme il le souhaite pour commander toutes les fonctionnalités de l'équipement à commander.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

Le dispositif de commande peut par exemple être un accessoire surajouté à la l'objet de commande. L'objet de commande peut être réalisé sous forme de smartphone.

## Revendications

1. Procédé de détermination d'un équipement à commander par un objet de commande transportable disposé dans un espace comprenant au moins une unité de positionnement apte à déterminer la position relative dudit objet de commande par rapport à cette unité de positionnement, le procédé comprenant:
- une étape pour associer un référentiel lié à l'objet de commande à un référentiel lié à l'au moins une unité de positionnement,
- une étape de détermination de la position et de l'orientation dudit objet de commande dans ledit espace à partir de ladite position de ladite au moins une unité de positionnement,
- une étape de détermination d'une direction et d'un sens pointé par ledit objet de commande à partir desdites position et orientation dudit objet de commande ainsi déterminées,
- une étape de détermination d'un équipement à commander dans l'espace à partir des directions et sens ainsi déterminés,
**caractérisé en ce que** l'étape d'association du référentiel lié à l'objet de commande au référentiel lié à l'au moins une unité de positionnement comprend pour chacune des unités de positionnement une étape comprenant un pointage par l'utilisateur de cet objet de commande d'une unité de positionnement et un appui de l'utilisateur sur l'objet de commande.

2. Procédé selon la revendication 1, dans lequel l'espace comprend une pluralité d'unité de positionnement aptes à déterminer leurs positions relatives les unes par rapport aux autres.

3. Procédé selon la revendication 1 ou 2, dans lequel l'étape de détermination de la position et/ou l'étape de détermination de l'orientation de l'objet de commande dans ledit espace comprend une étape d'évaluation du temps de trajet d'un signal radio entre l'objet de commande et une unité de positionnement, ou entre plusieurs unités de positionnement.

4. Procédé selon l'une quelconque des revendications précédentes, dans lequel l'étape de détermination de la position et/ou l'étape de détermination de l'orientation de l'objet de commande dans ledit espace comprend une étape d'évaluation de la puissance de réception d'un signal radio par l'objet de commande ou par l'au moins une unité de positionnement.

5. Procédé selon l'une quelconque des revendications précédentes, dans lequel l'étape de détermination de la position et/ou l'étape de détermination de l'orientation de l'objet de commande dans ledit espace comprend une étape de détermination des angles de réception d'un signal radio par l'objet de commande ou par l'au moins une unité de positionnement.

6. Procédé selon l'une quelconque des revendications précédentes, dans lequel l'étape de détermination de la position et/ou l'étape de détermination de l'orientation de l'objet de commande dans ledit espace met en œuvre une utilisation et une mesure de champs électromagnétiques.

7. Procédé selon l'une quelconque des revendications précédentes, **caractérisé en ce qu'**il comprend une étape pour définir une enveloppe virtuelle d'au moins un équipement à commander et **en ce que** l'étape de détermination d'un équipement à commander utilise l'enveloppe virtuelle définie pour l'au moins un équipement à commander.

8. Procédé selon la revendication 7, dans lequel l'enveloppe virtuelle de l'au moins un équipement à commander ne comprend aucun point de l'enveloppe physique de l'équipement à commander.

9. Procédé selon la revendication 7 ou 8, **caractérisé en ce qu'**il comprend une étape de déplacement d'un équipement à commander et une action d'un utilisateur sur l'objet de commande, l'action de l'utilisateur sur l'objet de commande étant suivie d'une nouvelle mise en œuvre d'un procédé selon l'une quelconque des revendications précédentes afin de déterminer la nouvelle enveloppe virtuelle dudit équipement déplacé.

10. Procédé selon l'une quelconque des revendications précédentes, **caractérisé en ce qu'**il comprend une étape d'enrichissement contextuel d'un équipement à commander par des données d'enrichissement et **en ce que** l'étape de détermination d'un équipement à commander met en œuvre cet enrichissement contextuel, ledit enrichissement mettant de préférence en œuvre des données de grandeurs physiques, l'heure, la date, la position de l'objet de commande, des réponses de l'utilisateur à des questions, ou la répétitivité de commandes effectuées par l'utilisateur.

11. Procédé de commande d'un équipement à commander parmi au moins un équipement à commander à partir d'un objet de commande, comprenant une étape de détermination d'un équipement à commander selon un procédé selon l'une quelconque des revendications 1 à 10 et une étape d'émission par l'objet de commande de données de commande à destination de l'équipement à commander.

12. Procédé de commande selon la revendication 11, **caractérisé en ce qu'**il comprend une étape de découverte automatique pour découvrir chacun des équipements à commander.

13. Procédé de commande selon la revendication 11 ou 12, **caractérisé en ce qu'**il comprend une adaptation d'une interface de commande de l'objet de commande en fonction de l'équipement à commander.

14. Procédé de commande selon l'une quelconque des revendications 11 à 13, **caractérisé en ce qu'**il comprend une interprétation par une surface tactile d'au moins un mouvement d'au moins un doigt d'un utilisateur sur ladite surface et **en ce que** les données de commande sont générées à partir de cette interprétation.

15. Procédé de commande selon l'une quelconque des revendications 11 à 14, **caractérisé en ce qu'**il comprend un affichage par l'interface de commande d'une information en fonction de l'équipement déterminé.

16. Dispositif de commande d'au moins un équipement à commander dans un espace par au moins un objet de commande transportable, ledit dispositif étant **caractérisé en ce qu'**il comprend :
- des moyens pour associer un référentiel lié à l'objet de commande à un référentiel lié à l'au moins une unité de positionnement,
- des moyens de détermination de la position et de l'orientation dudit au moins un objet de commande transportable dans ledit espace relativement à au moins une unité de positionnement,
- des moyens de détermination d'une direction et d'un sens pointé par ledit au moins un objet de commande à partir de la position et de l'orientation de cet objet de commande ainsi déterminées,
- des moyens de détermination d'un équipement à commander à partir de la direction et du sens ainsi déterminés,
**caractérisé en ce que** les moyens pour associer un référentiel lié à l'objet de commande à un référentiel lié à l'au moins une unité de positionnement comprennent, pour chacune des unités de positionnement, recevoir un pointage par l'utilisateur de cet objet de commande

## Patentansprüche

1. Verfahren zur Ermittlung einer Einrichtung, die durch ein transportables Steuerobjekt zu steuern ist, das in einem Raum angeordnet ist, der mindestens eine Positionierungseinheit umfasst, die dazu geeignet ist, die relative Position des Steuerobjekts in Bezug auf diese Positionierungseinheit zu ermitteln, wobei das Verfahren umfasst:
- einen Schritt, um ein mit dem Steuerobjekt verknüpftes Bezugssystem einem mit der mindestens einen Positionierungseinheit verknüpften Bezugssystem zuzuordnen,
- einen Schritt des Ermittelns der Position und der Ausrichtung des Steuerobjekts in dem Raum ausgehend von der Position der mindestens einen Positionierungseinheit,
- einen Schritt des Ermittelns einer Richtung und eines Richtungssinns, in den das Steuerobjekt zeigt, ausgehend von der so ermittelten Position und der so ermittelten Ausrichtung des Steuerobjekts,
- einen Schritt des Ermittelns einer zu steuernden Einrichtung in dem Raum ausgehend von der so ermittelten Richtung und dem so ermittelten Richtungssinn,
**dadurch gekennzeichnet, dass** der Schritt des Zuordnens des mit dem Steuerobjekt verknüpften Bezugssystems zu dem mit der mindestens einen Positionierungseinheit verknüpften Bezugssystem für jede der Positionierungseinheiten einen Schritt umfasst, der ein Zeigen durch den Benutzer mit diesem Steuerobjekt auf eine Positionierungseinheit und ein Drücken des Benutzers auf das Steuerobjekt umfasst.

2. Verfahren nach Anspruch 1, wobei der Raum eine Mehrzahl von Positionierungseinheiten umfasst, die dazu geeignet sind, ihre relativen Positionen zueinander zu ermitteln.

3. Verfahren nach Anspruch 1 oder 2, wobei der Schritt des Ermittelns der Position und/oder der Schritt des Ermittelns der Ausrichtung des Steuerobjekts in dem Raum einen Schritt des Schätzens der Laufzeit eines Funksignals zwischen dem Steuerobjekt und einer Positionierungseinheit oder zwischen mehreren Positionierungseinheiten umfasst.

4. Verfahren nach einem der vorhergehenden Ansprüche, wobei der Schritt des Ermittelns der Position und/oder der Schritt des Ermittelns der Ausrichtung des Steuerobjekts in dem Raum einen Schritt des Schätzens der Empfangsleistung eines Funksignals durch das Steuerobjekt oder durch die mindestens eine Positionierungseinheit umfasst.

5. Verfahren nach einem der vorhergehenden Ansprüche, wobei der Schritt des Ermittelns der Position und/oder der Schritt des Ermittelns der Ausrichtung des Steuerobjekts in dem Raum einen Schritt des Ermittelns der Empfangswinkel eines Funksignals durch das Steuerobjekt oder durch die mindestens eine Positionierungseinheit umfasst.

6. Verfahren nach einem der vorhergehenden Ansprüche, wobei der Schritt des Ermittelns der Position und/oder der Schritt des Ermittelns der Ausrichtung des Steuerobjekts in dem Raum eine Verwendung und eine Messung von elektromagnetischen Feldern implementiert.

7. Verfahren nach einem der vorhergehenden Ansprüche, **dadurch gekennzeichnet, dass** es einen Schritt umfasst, um eine virtuelle Hülle mindestens einer zu steuernden Einrichtung zu definieren, und dass der Schritt des Ermittelns einer zu steuernden Einrichtung die für die mindestens eine zu steuernde Einrichtung definierte virtuelle Hülle verwendet.

8. Verfahren nach Anspruch 7, wobei die virtuelle Hülle der mindestens einen zu steuernden Einrichtung keinen Punkt der physischen Hülle der zu steuernden Einrichtung umfasst.

9. Verfahren nach Anspruch 7 oder 8, **dadurch gekennzeichnet, dass** es einen Schritt des Verlagerns einer zu steuernden Einrichtung und eine Aktion eines Benutzers auf dem Steuerobjekt umfasst, wobei auf die Aktion des Benutzers auf dem Steuerobjekt eine erneute Implementierung eines Verfahrens nach einem der vorhergehenden Ansprüche folgt, um die neue virtuelle Hülle der verlagerten Einrichtung zu ermitteln.

10. Verfahren nach einem der vorhergehenden Ansprüche, **dadurch gekennzeichnet, dass** es einen Schritt der kontextuellen Anreicherung einer zu steuernden Einrichtung mit Anreicherungsdaten umfasst und dass der Schritt des Ermittelns einer zu steuernden Einrichtung diese kontextuelle Anreicherung implementiert, wobei die Anreicherung bevorzugt Daten physikalischer Größen, die Uhrzeit, das Datum, die Position des Steuerobjekts, Antworten des Benutzers auf Fragen oder die Wiederholbarkeit von vom Benutzer durchgeführten Steuerungen implementiert.

11. Verfahren zum Steuern einer zu steuernden Einrichtung unter mindestens einer ausgehend von einem Steuerobjekt zu steuernden Einrichtung, umfassend einen Schritt des Ermittelns einer zu steuernden Einrichtung nach einem Verfahren nach einem der Ansprüche 1 bis 10 und einen Schritt des Sendens von Steuerdaten durch das Steuerobjekt an die zu steuernde Einrichtung.

12. Verfahren zum Steuern nach Anspruch 11, **dadurch gekennzeichnet, dass** es einen Schritt des automatischen Entdeckens umfasst, um jede der zu steuernden Einrichtungen zu entdecken.

13. Verfahren zum Steuern nach Anspruch 11 oder 12, **dadurch gekennzeichnet, dass** es eine Anpassung einer Steuerschnittstelle des Steuerobjekts in Abhängigkeit von der zu steuernden Einrichtung umfasst.

14. Verfahren zum Steuern nach einem der Ansprüche 11 bis 13, **dadurch gekennzeichnet, dass** es eine Interpretation, durch eine taktile Oberfläche, mindestens einer Bewegung mindestens eines Fingers eines Benutzers auf der Oberfläche umfasst und dass die Steuerdaten ausgehend von dieser Interpretation erzeugt werden.

15. Verfahren zum Steuern nach einem der Ansprüche 11 bis 14, **dadurch gekennzeichnet, dass** es ein Anzeigen, durch die Steuerschnittstelle, einer Information in Abhängigkeit von der ermittelten Einrichtung umfasst.

16. Vorrichtung zum Steuern mindestens einer zu steuernden Einrichtung in einem Raum durch mindestens ein transportables Steuerobjekt, wobei die Vorrichtung **dadurch gekennzeichnet ist, dass** sie umfasst:
- Mittel, um ein mit dem Steuerobjekt verknüpftes Bezugssystem einem mit der mindestens einen Positionierungseinheit verknüpften Bezugssystem zuzuordnen,
- Mittel zum Ermitteln der Position und der Ausrichtung des mindestens einen transportablen Steuerobjekts in dem Raum relativ zu mindestens einer Positionierungseinheit,
- Mittel zum Ermitteln einer Richtung und eines Richtungssinns, in den das mindestens eine Steuerobjekt zeigt, ausgehend von der so ermittelten Position und der so ermittelten Ausrichtung dieses Steuerobjekts,
- Mittel zum Ermitteln einer zu steuernden Einrichtung ausgehend von der so ermittelten Richtung und dem so ermittelten Richtungssinn,
**dadurch gekennzeichnet, dass** die Mittel zum Zuordnen des mit dem Steuerobjekt verknüpften Bezugssystems zu einem mit der mindestens einen Positionierungseinheit verknüpften Bezugssystem für jede der Positionierungseinheiten das Empfangen eines Zeigens durch den Benutzer mit diesem Steuerobjekt auf eine Positionierungseinheit und ein Drücken des Benutzers auf das Steuerobjekt umfassen.

## Claims

1. Method for determining a piece of equipment to be controlled by a portable control object disposed in a space comprising at least one positioning unit capable of determining the relative position of said control object in relation to this positioning unit, the method comprising:
- a step of associating a reference frame related to the control object with a reference frame related to the at least one positioning unit,
- a step of determining the position and orientation of said control object in said space on the basis of said position of said at least one positioning unit,
- a step of determining a direction and line in/on which said control object is pointing on the basis of said thus determined position and orientation of said control object,
- a step of determining a piece of equipment to be controlled in the space on the basis of the thus determined directions and lines,
**characterized in that** the step of associating the reference frame related to the control object with the reference frame related to the at least one positioning unit comprises, for each of the positioning units, a step comprising the user pointing this control object at a positioning unit and the user pressing the control object.

2. Method according to Claim 1, wherein the space comprises a plurality of positioning units capable of determining their relative positions in relation to one another.

3. Method according to Claim 1 or 2, wherein the step of determining the position and/or the step of determining the orientation of the control object in said space comprises a step of evaluating the time of flight of a radio signal between the control object and a positioning unit, or between multiple positioning units.

4. Method according to any one of the preceding claims, wherein the step of determining the position and/or the step of determining the orientation of the control object in said space comprises a step of the control object or the at least one positioning unit evaluating the received power of a radio signal.

5. Method according to any one of the preceding claims, wherein the step of determining the position and/or the step of determining the orientation of the control object in said space comprises a step of the control object or the at least one positioning unit determining the angles of reception of a radio signal.

6. Method according to any one of the preceding claims, wherein the step of determining the position and/or the step of determining the orientation of the control object in said space uses and measures electromagnetic fields.

7. Method according to any one of the preceding claims, **characterized in that** it comprises a step to define a virtual envelope of at least one piece of equipment to be controlled and **in that** the step of determining a piece of equipment to be controlled uses the virtual envelope defined for the at least one piece of equipment to be controllede.

8. Method according to Claim 7, wherein the virtual envelope of the at least one piece of equipment to be controlled comprises no point on the physical envelope of the equipment to be controlled.

9. Method according to Claim 7 or 8, **characterized in that** it comprises a step of moving a piece of equipment to be controlled and an action by a user on the control object, the action by the user on the control object being followed by renewed performance of a method according to any one of the preceding claims in order to determine the new virtual envelope of said moved equipment.

10. Method according to any one of the preceding claims, **characterized in that** it comprises a step of contextually enhancing a piece of equipment to be controlled by way of enhancement data and **in that** the step of determining a piece of equipment to be controlled performs this contextual enhancement, said enhancement preferably implementing physical quantity data, the time, the date, the position of the control object, responses from the user to questions, or the repetitiveness of controls carried out by the user.

11. Method for controlling a piece of equipment to be controlled among at least one piece of equipment to be controlled from a control object, comprising a step of determining a piece of equipment to be controlled using a method according to any one of Claims 1 to 10 and a step of the control object transmitting control data to the equipment to be controlled.

12. Control method according to Claim 11, **characterized in that** it comprises a step of automatic discovery to discover each of the pieces of equipment to be controlled.

13. Control method according to Claim 11 or 12, **characterized in that** it comprises adapting a control interface of the control object according to the equipment to be controlled.

14. Control method according to any one of Claims 11 to 13, **characterized in that** it comprises a touch-sensitive surface interpreting at least one movement by at least one finger of a user on said surface and **in that** the control data are generated on the basis of this interpretation.

15. Control method according to any one of Claims 11 to 14, **characterized in that** it comprises the control interface displaying information according to the determined equipment.

16. Device for controlling at least one piece of equipment to be controlled in a space by at least one portable control object, said device being **characterized in that** it comprises:
- means for associating a reference frame related to the control object with a reference frame related to the at least one positioning unit,
- means for determining the position and orientation of said at least one portable control object in said space in relation to at least one positioning unit,
- means for determining a direction and line in/on which said at least one control object is pointing on the basis of the thus determined position and orientation of this control object,
- means for determining a piece of equipment to be controlled on the basis of the thus determined direction and line,
**characterized in that** the means for associating a reference frame related to the control object with a reference frame related to the at least one positioning unit comprise, for each of the positioning units, receiving the user's pointing of this control object at a positioning unit and the user's pressing of the control object.
